(19) Europäisches Patentamt / European Patent Office / Office européen des brevets

(11) **EP 3 936 400 B1**

(12) **EUROPEAN PATENT SPECIFICATION**

(45) Date of publication and mention
of the grant of the patent:
**13.12.2023 Bulletin 2023/50**

(21) Application number: **21761954.3**

(22) Date of filing: **14.05.2021**

(51) International Patent Classification (IPC):
**B60W 30/06** (2006.01)   **G06T 7/70** (2017.01)
**G06T 17/00** (2006.01)   **B60R 1/00** (2022.01)
**G05D 1/00** (2006.01)   **G06T 15/20** (2011.01)
**G06T 19/00** (2011.01)

(52) Cooperative Patent Classification (CPC):
**G06T 19/003; B60R 1/00; G06T 15/20;**
B60R 2300/303; B60R 2300/307; B60R 2300/607;
B60R 2300/806

(86) International application number:
**PCT/CN2021/093936**

(87) International publication number:
**WO 2021/228250 (18.11.2021 Gazette 2021/46)**

(54) **THREE-DIMENSIONAL PARKING DISPLAY METHOD, VEHICLE, AND STORAGE MEDIUM**

VERFAHREN ZUR DREIDIMENSIONALEN EINPARKANZEIGE, FAHRZEUG UND
SPEICHERMEDIUM

PROCÉDÉ D'AFFICHAGE DE STATIONNEMENT TRIDIMENSIONNEL, VÉHICULE, ET SUPPORT
DE STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.05.2020 CN 202010410618**

(43) Date of publication of application:
**12.01.2022 Bulletin 2022/02**

(73) Proprietor: **Guangzhou Xiaopeng Motors
Technology Co., Ltd.
Guangzhou 510000 (CN)**

(72) Inventor: **HUANG, Yeting
Guangzhou,
Guangdong 510000 (CN)**

(74) Representative: **Ran, Handong
Maucher Jenkins
Seventh Floor Offices
Artillery House
11-19 Artillery Row
London SW1P 1RT (GB)**

(56) References cited:
**EP-A1- 1 179 958        EP-A1- 3 392 801
EP-A1- 3 546 293        CN-A- 101 816 175
CN-A- 107 089 266       CN-A- 107 856 608
CN-A- 111 559 371       US-A1- 2009 079 828
US-A1- 2018 001 821     US-A1- 2018 229 657**

## Description

The present application claims priority to Chinese Patent Application No. 202010410618.0, titled "THREE-DIMENSIONAL PARKING DISPLAY METHOD, VEHICLE, AND STORAGE MEDIUM", and filed on May 15, 2020.

## TECHNICAL FIELD

The present disclosure relates to the field of automobile technologies, and in particular, to a three-dimensional parking display method, a vehicle and a storage medium.

## BACKGROUND

A vehicle in the related art can display an image of a parking scenario during parking. Specifically, the image of the parking scenario can be displayed from several angles of view. However, in the related art, a plurality of angles of view is usually switched directly. Such switching is rigid and unnatural, and has a problem of image flickering. Therefore, the visual effect is poor, resulting in poor user experience. EP 1179958 A1 discloses an image processing device and a monitoring system. EP 3392801 A1 discloses systems and methods for driver assistance. US 2009/079828 A1 discloses the features of the preamble of claim 1.

## SUMMARY

In view of this, an embodiment of the present disclosure provides a three-dimensional parking display method, a vehicle and a storage medium.

The present disclosure provides a three-dimensional parking display method. The method includes: determining an initial angle of view and a final angle of view of a virtual camera to a three-dimensional parking scenario based on an obtained parking start instruction; determining a transition angle of view based on the initial angle of view and the final angle of view, the transition angle of view being an angle of view of the virtual camera in a process of switching from the initial angle of view to the final angle of view; and displaying a plurality of image frames of the three-dimensional parking scenario drawn by the virtual camera based on the initial angle of view, the transition angle of view, and the final angle of view. Said determining the transition angle of view based on the initial angle of view and the final angle of view includes: determining a switching benchmark based on a parking stage of the three-dimensional parking scenario, the switching benchmark including an initial benchmark value corresponding to the initial angle of view and a final benchmark value corresponding to the final angle of view; determining a transition benchmark value based on the initial benchmark value and the final benchmark value, the transition benchmark value being a value of the switching benchmark corresponding to the transition angle of view; determining, based on the transition benchmark value, a switching ratio for switching from the transition angle of view to the final angle of view; and determining the transition angle of view based on the switching ratio, the initial angle of view, and the final angle of view. The parking stage includes a parking-in stage. Said determining the switching benchmark based on the parking stage of the three-dimensional parking scenario includes: determining a parking-in distance between a vehicle and a parking space as the switching benchmark when the three-dimensional parking scenario is in the parking-in stage. The parking-in distance includes an initial distance value corresponding to the initial angle of view and a final distance value corresponding to the final angle of view. Said determining the transition benchmark value based on the initial benchmark value and the final benchmark value includes: determining a transition distance value based on the initial distance value and the final distance value, the transition distance value being a value of the parking-in distance corresponding to the transition angle of view. Said determining, based on the transition benchmark value, the switching ratio for switching from the transition angle of view to the final angle of view includes: determining, based on the transition distance value and the initial distance value, the switching ratio for switching from the transition angle of view to the final angle of view.

In some embodiments, the three-dimensional parking scenario further includes at least one of a vehicle-searching scenario, a vehicle-selecting scenario, or a vehicle-sliding scenario.

In some embodiments, the parking stage includes a pre-parking-in stage. Said determining the switching benchmark based on the parking stage of the three-dimensional parking scenario includes: determining a shooting angle of the virtual camera as the switching benchmark when the three-dimensional parking scenario is in the pre-parking-in stage, the shooting angle including an initial angle value corresponding to the initial angle of view and a final angle value corresponding to the final angle of view. Said determining the transition benchmark value based on the initial benchmark value and the final benchmark value includes: determining a transition angle value based on the initial angle value and the final angle value, the transition angle value being a value of the shooting angle corresponding to the transition angle of view. Said determining, based on the transition benchmark value, the switching ratio for switching from the transition angle of view to the final angle of view includes: determining, based on the transition angle value and the final angle value, the switching ratio for switching from the transition angle of view to the final angle of view.

In some embodiments, the three-dimensional parking display method includes determining the initial distance value based on a position of the vehicle corresponding to the initial angle of view and a position of the parking space.

In some embodiments, the initial angle of view includes an initial camera position and an initial preview position of the virtual camera; the final angle of view includes a final camera position and a final preview position of the virtual camera; the transition angle of view includes a transition camera position and a transition preview position of the virtual camera; and said determining the transition angle of view based on the switching ratio, the initial angle of view, and the final angle of view includes: determining the transition camera position based on the switching ratio, the initial camera position, and the final camera position; and determining the transition preview position based on the switching ratio, the initial preview position, and the final preview position.

In some embodiments, said displaying the plurality of image frames of the three-dimensional parking scenario drawn by the virtual camera based on the initial angle of view, the transition angle of view, and the final angle of view includes: obtaining an image frame of an initial parking picture drawn by the virtual camera at the initial angle of view, an image frame of a transition parking picture drawn by the virtual camera at the transition angle of view, and an image frame of a final parking picture drawn by the virtual camera at the final angle of view; and displaying the image frame of the initial parking picture, the image frame of the transition parking picture, and the image frame of the final parking picture sequentially.

The present disclosure provides a vehicle. The vehicle includes a memory and a processor. The memory has a computer program stored thereon. The processor is configured to execute the computer program to implement the three-dimensional parking display method according to any of the above embodiments.

The present disclosure provides a non-volatile computer-readable storage medium containing computer-executable instructions. The computer-executable instructions, when executed by one or more processors, cause the one or more processors to implement the three-dimensional parking display method according to any of the above embodiments.

In a control method, the vehicle, and the computer-readable storage medium according to the embodiments of the present disclosure, the plurality of image frames of the three-dimensional parking scenario drawn by the virtual camera is displayed based on the initial angle of view and the final angle of view of the virtual camera to the three-dimensional parking scenario that are determined based on the parking start instruction, and the transition angle of view determined based on the initial angle of view and the final angle of view, such that the displayed parking picture is adapted to a real parking scenario, and switching between the initial angle of view and the final angle of view is smooth and natural. In this way, the visual effect is better, which is beneficial to improve user experience.

## BRIEF DESCRIPTION OF DRAWINGS

The above and/or additional aspects and advantages of the present disclosure will become more apparent and more understandable from the following description of embodiments taken in conjunction with the accompanying drawings, in which:

FIG. 1 is a flowchart illustrating a three-dimensional parking display method according to some embodiments of the present disclosure;

FIG. 2 is a schematic diagram showing modules of a vehicle according to some embodiments of the present disclosure;

FIG. 3 is a schematic diagram showing a structure of a vehicle according to some embodiments of the present disclosure;

FIG. 4 is a schematic diagram showing a scenario of a three-dimensional parking display method according to some embodiments of the present disclosure;

FIG. 5 is a schematic diagram showing a display effect of a three-dimensional parking display method in the related art;

FIG. 6 is a schematic diagram showing another display effect of a three-dimensional parking display method in the related art;

FIG. 7 is a schematic diagram showing a display effect of a three-dimensional parking display method according to some embodiments of the present disclosure;

FIG. 8 is a schematic diagram showing another display effect of a three-dimensional parking display method according to some embodiments of the present disclosure;

FIG. 9 is a flowchart illustrating a three-dimensional parking display method according to some embodiments of the present disclosure;

FIG. 10 is a flowchart illustrating a three-dimensional parking display method according to some embodiments of the present disclosure;

FIG. 11 is a flowchart illustrating a three-dimensional parking display method according to some embodiments of the present disclosure;

FIG. 12 is a flowchart illustrating a three-dimensional parking display method according to some embodiments of the present disclosure; and

FIG. 13 is a flowchart illustrating a three-dimensional parking display method according to some embodiments of the present disclosure.

## DESCRIPTION OF EMBODIMENTS

The embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

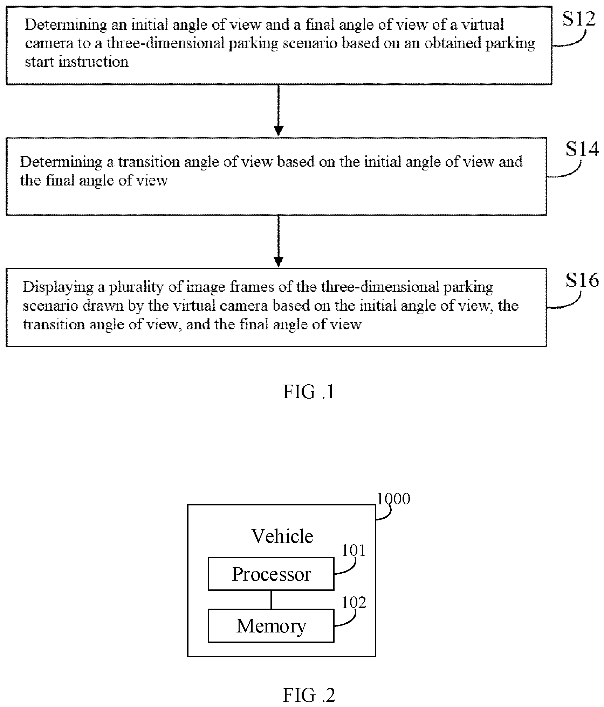

Referring to FIG. 1, FIG. 2 and FIG. 3, the present disclosure provides a three-dimensional parking display method and a vehicle 1000.

The three-dimensional parking display method provided by the present disclosure includes: step S12, determining an initial angle of view and a final angle of view of a virtual camera to a three-dimensional parking scenario based on an obtained parking start instruction; step S14, determining a transition angle of view based on the initial angle of view and the final angle of view; and step S16, displaying a plurality of image frames of the three-dimensional parking scenario drawn by the virtual camera based on the initial angle of view, the transition angle of view, and the final angle of view.

The vehicle 1000 provided in the present disclosure includes a memory 102 and a processor 101. The memory 102 has a computer program stored thereon. The processor 101 is configured to execute the program to implement the above three-dimensional parking display method.

That is, the processor 101 is configured to determine the initial angle of view and the final angle of view of the virtual camera to the three-dimensional parking scenario based on the obtained parking start instruction; determine the transition angle of view based on the initial angle of view and the final angle of view; and display the plurality of image frames of the three-dimensional parking scenario drawn by the virtual camera based on the initial angle of view, the transition angle of view, and the final angle of view.

In a control method and the vehicle 1000 according to an embodiment of the present disclosure, the plurality of image frames of the three-dimensional parking scenario drawn by the virtual camera is displayed based on the initial angle of view and the final angle of view of the virtual camera to the three-dimensional parking scenario that are determined based on the parking start instruction, and the transition angle of view determined based on the initial angle of view and the final angle of view, such that the displayed parking picture is adapted to a real parking scenario, and switching between the initial angle of view and the final angle of view is smooth and natural. In this way, the visual effect is better, which is beneficial to improve user experience.

Specifically, the vehicle 1000 may include a display component, and the plurality of image frames of the three-dimensional parking scenario drawn by the virtual camera may be displayed through the display component. The display component includes at least one of a central control screen, an instrument screen, or a windshield. It can be understood that the windshield can be used for Head Up Display (HUD).

In step S12, the three-dimensional parking scenario can be determined based on the parking start instruction, and the initial angle of view and the final angle of view of the virtual camera to the three-dimensional parking scenario are then determined based on the three-dimensional parking scenario. In this way, the initial angle of view and the final angle of view are determined based on the parking start instruction.

Specifically, the parking start instruction can be triggered by a user. For example, the parking start instruction can be triggered by at least one of voice information, gesture information, key information, or touch screen information input by the user.

Specifically, the parking start instruction can also be triggered by the vehicle 1000 based on detection data. For example, the parking start instruction can be triggered in response to detection of a target parking space. As for this, the present disclosure has no limitations herein.

Specifically, the three-dimensional parking scenario includes at least one of a vehicle-searching scenario, a vehicle-selecting scenario, a vehicle-sliding scenario, or a parking-in scenario.

When only one three-dimensional parking scenario is included, an angle of view initially corresponding to the three-dimensional parking scenario may be directly determined as the initial angle of view, and an angle of view finally corresponding to the three-dimensional parking scenario may be directly determined as the final angle of view.

When more than one three-dimensional parking scenarios are included, an angle of view initially corresponding to the first three-dimensional parking scenario may be determined as the initial angle of view, and an angle of view finally corresponding to the last three-dimensional parking scenario may be determined as the final angle of view.

In an example, the three-dimensional parking scenario includes the vehicle-searching scenario. An angle of view initially corresponding to the vehicle-searching scenario may be determined as the initial angle of view, and an angle of view finally corresponding to the vehicle-searching scenario may be determined as the final angle of view.

In another example, the three-dimensional parking scenario includes the vehicle-searching scenario and the vehicle-selecting scenario. An angle of view initially corresponding to the vehicle-searching scenario can be determined as the initial angle of view, and an angle of view finally corresponding to the vehicle-selecting scenario can be determined as the final angle of view.

In another example, the three-dimensional parking scenario includes the parking-in scenario. An angle of view initially corresponding to the parking-in scenario can be determined as the initial angle of view, and an angle of view finally corresponding to the parking-in scenario can be determined as the final angle of view.

A specific form of the three-dimensional parking scenario is not limited here.

An angle of view corresponding to each three-dimensional parking scenario can be predetermined and stored in the vehicle 1000. When the three-dimensional parking scenario is determined, the initial angle of view and the final angle of view may be determined based on the three-dimensional parking scenario.

It should be noted that the "three-dimensional parking scenario" in step S12 does not refer to a real parking scenario, but refers to a virtual three-dimensional scenario corresponding to the real parking scenario and observed by the virtual camera.

Further, the three-dimensional parking scenario may include a three-dimensional vehicle model and a three-dimensional environment model. The three-dimensional vehicle model can be established based on pre-stored vehicle data, and the three-dimensional environment model can be established based on signal data collected by the vehicle.

Similarly, the virtual camera does not refer to a camera entity capable of shooting a real scenario, but a virtual camera used to observe the three-dimensional parking scenario. The virtual camera can draw image frames of the three-dimensional parking scenario when the virtual camera is at each angle of view. The user can understand a visual state of the three-dimensional parking scenario from a plurality of angles of view by observing the displayed plurality of image frames, such that the user can observe the three-dimensional parking scenario, especially the three-dimensional vehicle model in the three-dimensional parking scenario, from the plurality of angles of view.

Specifically, the angle of view may refer to a state of the virtual camera observing the three-dimensional parking model. In an embodiment, the angle of view may include a camera position and a preview position. The camera position refers to a position of the virtual camera in the three-dimensional parking scenario. The preview position is related to a direction in which the virtual camera observes the three-dimensional vehicle model. A connection line from the camera position to the preview position, i.e., a line of sight of the virtual camera, is related to a camera vector and can represent the direction in which the virtual camera observes the three-dimensional vehicle model.

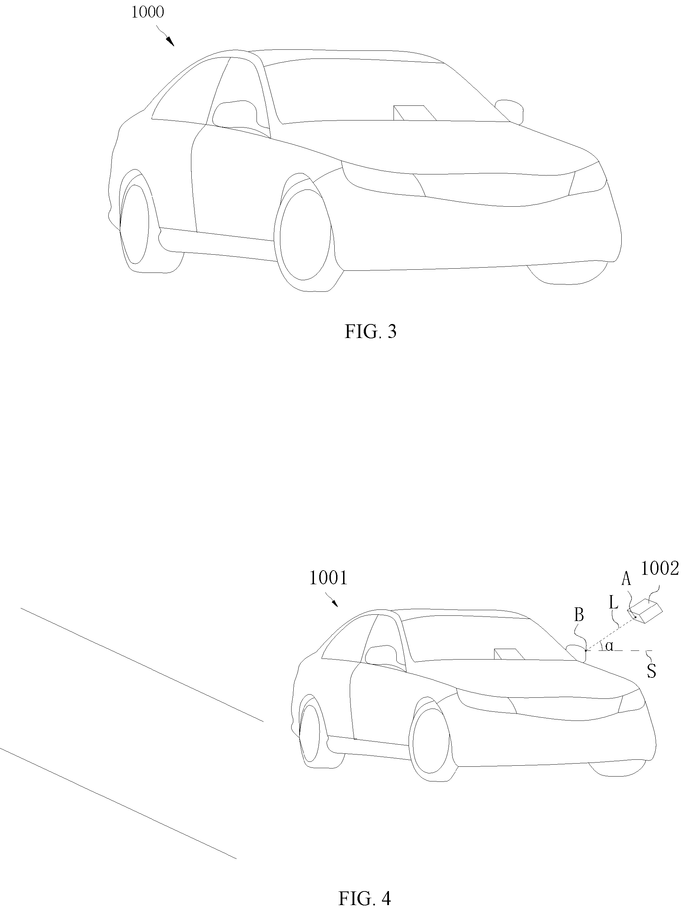

In an example illustrated by FIG. 4, a camera position of a virtual camera 1002 is position A, an observation position is position B, and a connection line L between position A and position B is a line of sight of the virtual camera 1002. An angle between the connection line L and a horizontal plane S in the three-dimensional parking model 1001 forms a shooting angle $\alpha$.

Based on this, the initial angle of view and the final angle of view may respectively refer to an initial angle of view and a final angle of view of the virtual camera in the three-dimensional parking scenario to the three-dimensional vehicle model in the three-dimensional parking scenario. The transition angle of view can be understood as an angle of view of the virtual camera in a process of switching from the initial angle of view to the final angle of view, i.e., a position and an orientation of the virtual camera in a process of the virtual camera moving from an initial camera position to a final camera position and adjusting the line of sight from an initial preview position to a final preview position.

As described above, the angle of view corresponding to each scenario can be predetermined and stored in the vehicle 1000. When the three-dimensional parking scenario is determined, a corresponding angle of view can be determined, such that the shooting angle can be determined. For example, the shooting angle of the vehicle-searching scenario is 38°, the shooting angle of the vehicle-selecting scenario is 58°, an initial shooting angle of the parking-in scenario is 58°, and a final shooting angle of the parking-in scenario is 90°.

It should be noted that in an embodiment, camera position coordinates can be represented by a coordinate value of an X axis of a coordinate system, a coordinate value of a Y axis of the coordinate system, and a coordinate value of a Z axis of the coordinate system. The X axis of the coordinate system is used for the virtual camera to move left and right, the Y axis of the coordinate system is used for controlling the virtual camera to move perpendicular to a display, and the Z axis of the coordinate system is used for controlling the virtual camera to move up and down.

It can be understood that a number of transition angles of view may be one, two, three, four, or other values. The greater the number of transition angles of view, the more natural and smoother the switching from the initial angle of view to the final angle of view. The number of transition angles of view is not limited here.

In an embodiment, step S16 includes: obtaining an image frame of an initial parking picture drawn by the virtual camera at the initial angle of view, an image frame of a transition parking picture drawn by the virtual camera at the transition angle of view, and an image frame of a final parking picture drawn by the virtual camera at the final angle of view; and displaying the image frame of the initial parking picture, the image frame of the transition parking picture, and the image frame of the final parking picture sequentially.

Correspondingly, the processor 101 is configured to obtain an image frame of an initial parking picture drawn by the virtual camera at the initial angle of view, an image frame of a transition parking picture drawn by the virtual camera at the transition angle of view, and an image frame of a final parking picture drawn by the virtual camera at the final angle of view, and display the image frame of the initial parking picture, the image frame of the transition parking picture, and the image frame of the final parking picture sequentially.

In this way, the plurality of image frames of the three-dimensional parking scenario drawn by the virtual camera is displayed based on the initial angle of view, the transition angle of view, and the final angle of view. In addition, since the image frame of the initial parking picture, the image frame of the transition parking picture, and the image frame of the final parking picture are displayed sequentially, the user can observe the three-dimensional vehicle model from the initial angle of view and smoothly switch to observing the three-dimensional vehicle model from the final angle of view, thereby avoiding chaotic display of image frames and helping to improve the visual effect.

Specifically, when an operating system of a control terminal 100 is an android system, the image frame of the initial parking picture, the image frame of the transition parking picture, and the image frame of the final parking picture can be drawn through an Open Graphics Library (openGL). When the operating system of the control terminal 100 is an IOS system, the image frame of the initial parking picture, the image frame of the transition parking picture, and the image frame of the final parking picture can be drawn by Metal. The present disclosure has no limitations to the way of drawing picture frames herein.

Specifically, when a plurality of transition picture frames is provided, the display may sequentially display the plurality of transition picture frames after displaying the initial picture frame, and then display a final picture frame.

An effect of the three-dimensional parking display method according to the embodiment of the present disclosure will be further explained and described below by taking the parking scenario including the vehicle-searching scenario and the vehicle-sliding scenario as an example.

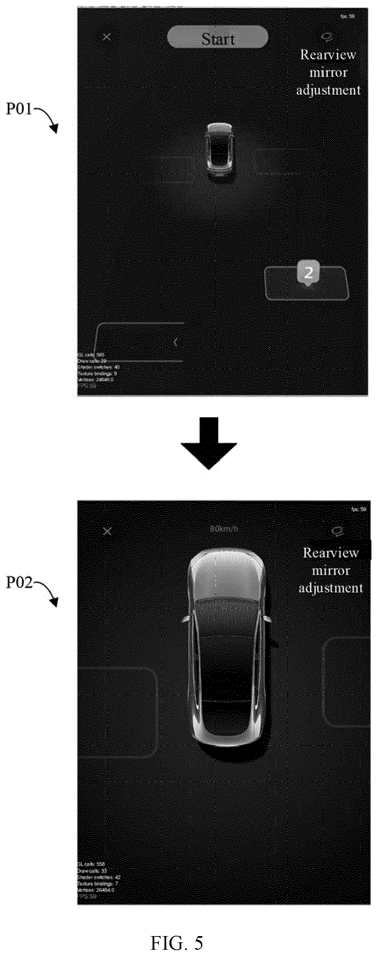

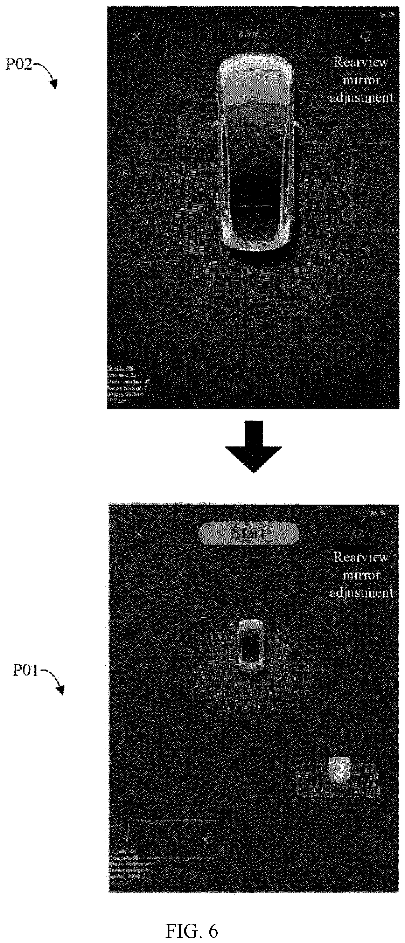

Referring to FIG. 5, for a parking process in the related art, when the vehicle-searching scenario is switched to the vehicle-sliding scenario, the virtual camera directly switches from a vehicle-searching angle of view to a vehicle-sliding angle of view. That is, display of an image frame P01 corresponding to the vehicle-searching angle of view is directly switched to display of an image frame P02 corresponding to the vehicle-sliding angle of view. Referring to FIG. 6, for the parking process in the related art, when the virtual camera is switched from the vehicle-sliding angle of view to the vehicle-searching angle of view, the display of the image frame P02 corresponding to the vehicle-sliding angle of view is directly switched to the display of the image frame P01 corresponding to the vehicle-searching angle of view.

In this way, switching of the angles of view is rigid and unnatural, resulting in a poor visual effect. The user is likely to feel that the vehicle in a parking picture suddenly zooms in or out, resulting in poor user experience.

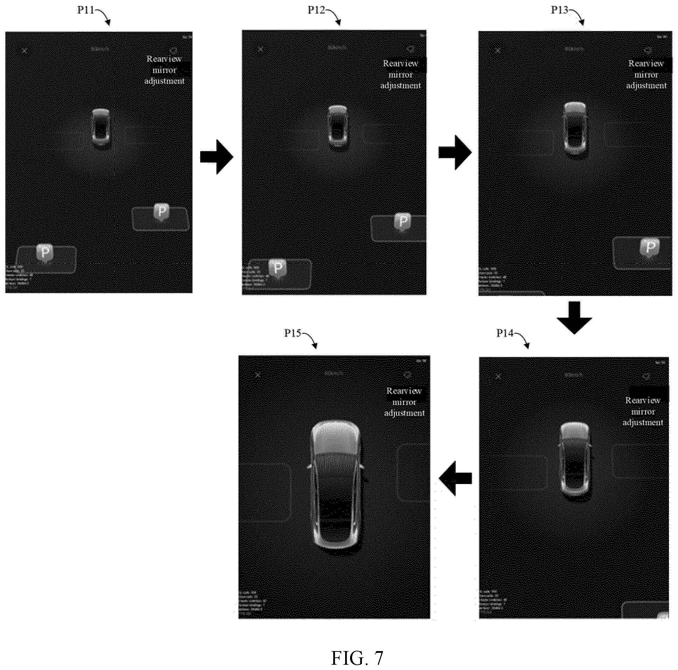

Referring to FIG. 7, for the parking process of the three-dimensional parking display method according to an embodiment of the present disclosure, when the vehicle-searching scenario is switched to the vehicle-sliding scenario, the virtual camera switches from the vehicle-searching angle of view to a first transition angle of view, then to a second transitional angle of view, to a third transition angle of view, and finally to the vehicle-sliding angle of view, i.e., switching from displaying an image frame P11 corresponding to the vehicle-searching angle of view to displaying an image frame P12 corresponding to the first transition angle of view, then to displaying an image frame P13 corresponding to the second transition angle of view, to displaying an image frame P14 corresponding to the third transition angle of view, and finally to displaying an image frame P15 corresponding to the vehicle-sliding angle of view.

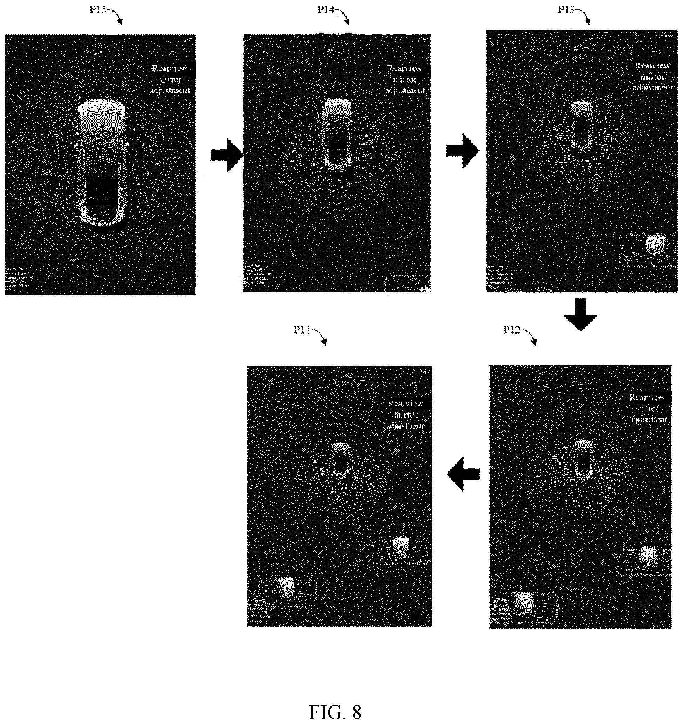

Referring to FIG. 8, for the parking process of the three-dimensional parking display method according to an embodiment of the present disclosure, when the vehicle-sliding scenario is switched to the vehicle-searching scenario, the virtual camera switches from the vehicle-sliding angle of view to the third transition angle of view, then to the second transition angle of view, to the first transition angle of view, and finally to the vehicle-searching angle of view, i.e., switching from displaying the image frame P15 corresponding to the vehicle-sliding angle of view to displaying the image frame P14 corresponding to the third transition angle of view, then to displaying the image frame P13 corresponding to the second transition angle of view, to displaying the image frame P12 corresponding to the first transition angle of view, and finally to displaying the image frame P11 corresponding to the vehicle-sliding angle of view.

Therefore, a transition effect is achieved through three transition angles of view between the vehicle-searching angle of view and the vehicle-sliding angle of view, thereby making the parking pictures displayed on the display smoother and more natural. In this way, the vehicle will not zoom in or out suddenly in the parking pictures, and a transition effect is generated visually, providing better user experience.

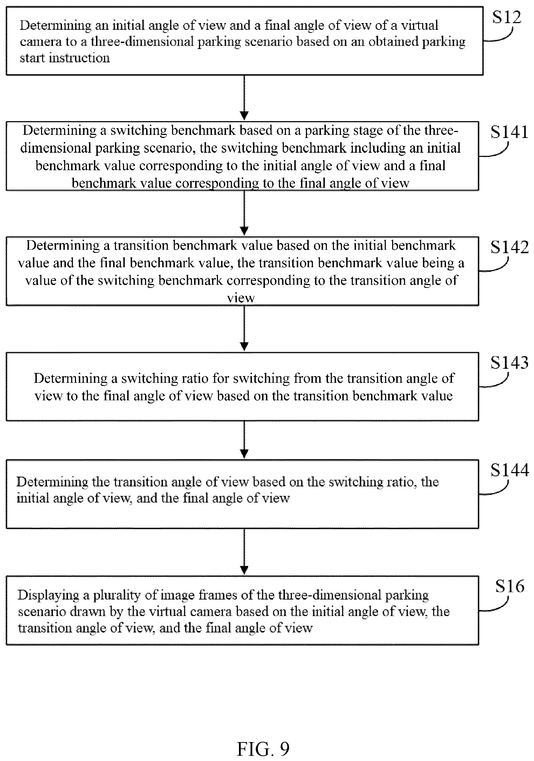

Referring to FIG. 9, in some embodiments, step S14 includes the following steps S141 to S144.

In step S141, a switching benchmark is determined based on a parking stage of the three-dimensional parking scenario. The switching benchmark includes an initial benchmark value corresponding to the initial angle of view and a final benchmark value corresponding to the final angle of view.

In step S142, a transition benchmark value is determined based on the initial benchmark value and the final benchmark value. The transition benchmark value is a value of the switching benchmark corresponding to the transition angle of view.

In step S143, a switching ratio for switching from the transition angle of view to the final angle of view is determined based on the transition benchmark value.

In step S144, the transition angle of view is determined based on the switching ratio, the initial angle of view, and the final angle of view.

In some embodiments, the processor 101 is configured to determine a switching benchmark based on a parking stage of the three-dimensional parking scenario, the switching benchmark including an initial benchmark value corresponding to the initial angle of view and a final benchmark value corresponding to the final angle of view; determine a transition benchmark value based on the initial benchmark value and the final benchmark value, the transition benchmark value being a value of the switching benchmark corresponding to the transition angle of view; determine, based on the transition benchmark value, a switching ratio for switching from the transition angle of view to the final angle of view; and determine the transition angle of view based on the switching ratio, the initial angle of view, and the final angle of view.

In this way, the transition angle of view is determined based on the initial angle of view and the final angle of view. In addition, since the switching benchmark is determined based on the parking stage, the switching benchmark is adapted to different parking stages, which can improve the accuracy of determining the transition angle of view, thereby making the switching more natural and smoother, and helping improve the visual effect.

In step S141, the initial benchmark value is a value of the switching benchmark corresponding to the initial angle of view, and the final benchmark value is a value of the switching benchmark corresponding to the final angle of view.

Specifically, the switching benchmark may include at least one of the shooting angle, the camera position, the preview position, and switching time of the virtual camera. It can be understood that the initial benchmark value is the value of the switching benchmark corresponding to the initial angle of view, and the final benchmark value is the value of the switching benchmark corresponding to the final angle of view.

For example, the switching benchmark is the shooting angle, the initial benchmark value is 30, and the final benchmark value is 60. In another example, the switching benchmark is an X value of the camera position, the initial benchmark value is 1, and the final benchmark value is 2. In still another example, the switching benchmark is a Y value of the preview position, the initial benchmark value is 2, and the final benchmark value is 1. In still another example, the switching benchmark is time in seconds having lapsed since the display begins to display a parking display interface, the initial benchmark value is 1, and the final benchmark value is 2.

The above are only examples, and a specific form of the switching benchmark and specific values of the initial benchmark value and the final benchmark value are not limited herein.

In step S142, a tool ValueAnimator may be used to determine the transition benchmark value based on the initial benchmark value and the final benchmark value. Specifically, a series of numbers, i.e., a plurality of transition benchmark values between the initial benchmark value y_start and the final benchmark value y_end can be generated through the following code:

```
ValueAnimator translateAnimator = ValueAnimator.ofFloat(y_start, y_end).
```

It can be understood that a predetermined value can also be used to determine the transition benchmark value based on the initial benchmark value and the final benchmark value. For example, if the initial benchmark value is 1, the final benchmark value is 10, and the predetermined value is 1, then the transition benchmark values can be determined as 2, 3, 4, 5, 6, 7, 8, and 9.

A specific method for determining the transition benchmark value is not limited here.

In addition, a plurality of transition benchmark values may be provided, and a difference between every two adjacent transition benchmark values may be the same. In this way, the transition effect is more uniform and smoother visually, which is beneficial to improve the user experience.

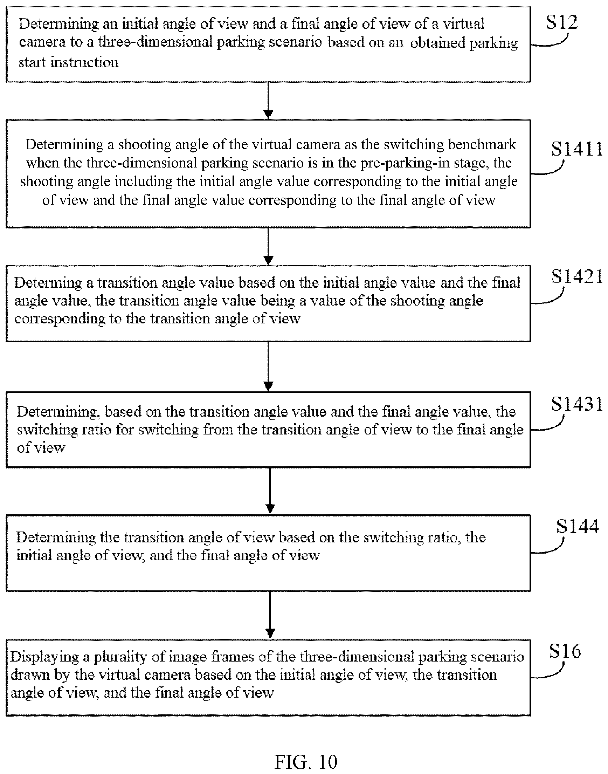

Referring to FIG. 10, in some embodiments, the parking stage includes a pre-parking-in stage. Step S141 includes step S1411, in which a shooting angle of the virtual camera is determined as the switching benchmark when the three-dimensional parking scenario is in the pre-parking-in stage, the shooting angle including the initial angle value corresponding to the initial angle of view and the final angle value corresponding to the final angle of view.

Step S142 includes step S1421, in which a transition angle value is determined based on the initial angle value and the final angle value, the transition angle value being a value of the shooting angle corresponding to the transition angle of view.

Step S143 includes step S1431, in which the switching ratio for switching from the transition angle of view to the final angle of view is determined based on the transition angle value and the final angle value.

In some embodiments, the parking stage includes the pre-parking-in stage. The processor 101 is configured to determine a shooting angle of the virtual camera as the switching benchmark when the three-dimensional parking scenario is in the pre-parking-in stage, wherein the shooting angle includes the initial angle value corresponding to the initial angle of view and the final angle value corresponding to the final angle of view; determine the transition angle value based on the initial angle value and the final angle value, the transition angle value being a value of the shooting angle corresponding to the transition angle of view; and determine, based on the transition angle value and the final angle value, the switching ratio for switching from the transition angle of view to the final angle of view.

In this way, when the three-dimensional parking scenario is in the pre-parking-in stage, the transition angle value is determined based on the initial angle value and the final angle value, and thus the switching ratio for switching from the transition angle of view to the final angle of view can be determined. The processing process is simple and the processing speed can be improved.

In step S1411, the three-dimensional parking scenario being in the pre-parking-in stage means that the vehicle 1000 performs no parking-in movement in the three-dimensional parking scenario. For example, the three-dimensional parking scenario is at least one of the vehicle-searching scenario, the vehicle-selecting scenario, or the vehicle-sliding scenario, which is not limited herein. It can be understood that the switching of the angle of view of the three-dimensional parking scenario in the pre-parking-in stage is basically narrowing or enlarging a vehicle-searching region, and rotating the virtual camera at a certain angle about the X axis.

In step S1421, the transition angle value may be determined based on the initial angle value and the final angle value through the tool ValueAnimator or the predetermined value described above. For brevity, details thereof will be omitted here.

In step S1431, a ratio of the transition angle value to the final angle value is determined as the switching ratio.

In an example, the three-dimensional parking scenario includes the vehicle-searching scenario and the vehicle-selecting scenario. The initial angle value corresponding to the vehicle-searching scenario is 38°. The final angle value corresponding to the vehicle-selecting scenario is 58°. A plurality of transition angle values between 38 and 58 can be generated by the following code: ValueAnimator translateAnimator = ValueAnimator.ofFloat(38,58). If a certain transition angle value is 48, the switching ratio corresponding to the transition angle value is 48/58.

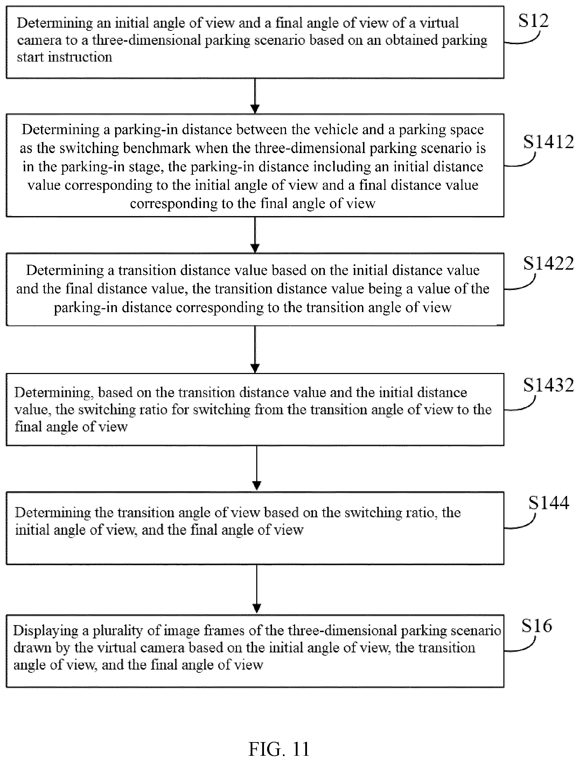

Referring to FIG. 11, in some embodiments, the parking stage includes a parking-in stage. Step S141 includes step S1412, in which a parking-in distance between the vehicle 1000 and a parking space is determined as the switching benchmark when the three-dimensional parking scenario is in the parking-in stage. The parking-in distance includes an initial distance value corresponding to the initial angle of view and a final distance value corresponding to the final angle of view.

Step S142 includes step S1422, in which a transition distance value is determined based on the initial distance value and the final distance value, the transition distance value being a value of the parking-in distance corresponding to the transition angle of view.

Step S143 includes step S1432, in which the switching ratio for switching from the transition angle of view to the final angle of view is determined based on the transition distance value and the initial distance value.

In some embodiments, the parking stage includes a parking-in stage. The processor 101 is configured to determine a parking-in distance between the vehicle 1000 and a parking space as the switching benchmark when the three-dimensional parking scenario is in the parking-in stage, wherein the parking-in distance includes an initial distance value corresponding to the initial angle of view and a final distance value corresponding to the final angle of view; determine a transition distance value based on the initial distance value and the final distance value, the transition distance value being a value of the parking-in distance corresponding to the transition angle of view; and determine, based on the transition distance value and the initial distance value, the switching ratio for switching from the transition angle of view to the final angle of view.

In this way, when the three-dimensional parking scenario is in the parking-in stage, the initial distance value and the final distance value determine the transition distance value, and thus the switching ratio for switching from the transition angle of view to the final angle of view is determined, such that the switching of the angle of view is synchronized with the movement of the vehicle. When the vehicle starts to dock, the switching of the angle of view also starts, and when parking-in of the vehicle is completed, the switching of the angle of view is also completed, such that the visual effect is better.

In step S1412, the three-dimensional parking scenario being in the parking-in stage may mean that the vehicle 1000 is performing the parking-in movement in the three-dimensional parking scenario.

In an example, parking-in starts after the vehicle selecting is completed. The final angle of view of the vehicle-selecting scenario is the initial angle of view, and the final angle of view of the parking-in scenario is the final angle of view.

In another example, parking-in starts after the vehicle searching is completed. The final angle of view of the vehicle-searching scenario is the initial angle of view, and the final angle of view of the parking-in scenario is the final angle of view. The present disclosure is not limited to any of these examples.

In step S1412, the transition distance value is determined based on the initial distance value and the final distance value through the tool ValueAnimator or the predetermined value described above. For brevity, details thereof will be omitted here.

In step S1432, a difference between the initial distance value and a current distance value may be determined, and a ratio of the difference to the initial distance value is determined as the switching ratio.

In an example, the three-dimensional parking scenario is the parking-in scenario, i.e., in the parking-in stage, the initial distance value is 100, and the final distance value is 0. A plurality of transition distance values between 100 and 0 can be generated by the following code:

$$\text{ValueAnimator translateAnimator} = \text{ValueAnimator.ofFloat}(38,58).$$

When a certain transition distance value is 30, the switching ratio corresponding to the transition distance value is 7/10.

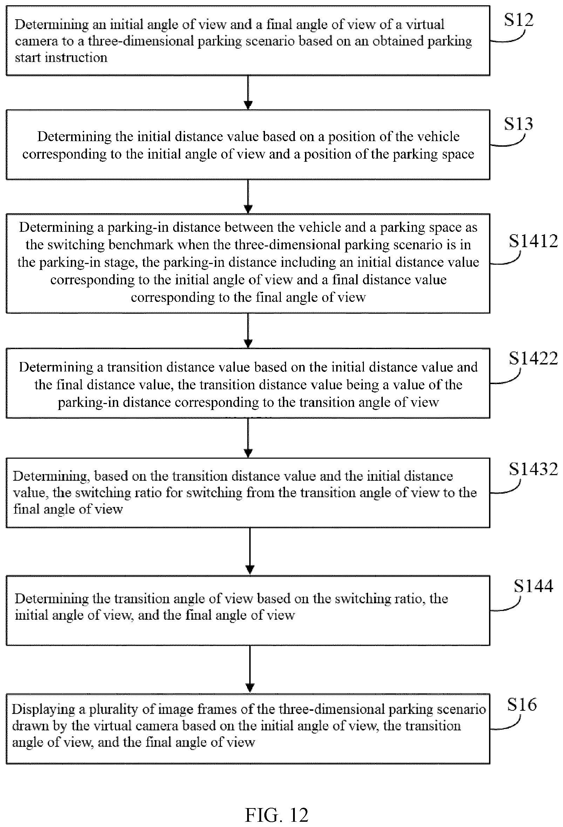

Referring to FIG. 12, in some embodiments, the three-dimensional parking display method includes step S13, in which the initial distance value is determined based on a position of the vehicle corresponding to the initial angle of view and a position of the parking space.

In some embodiments, the processor 101 is configured to determine the initial distance value based on a position of the vehicle corresponding to the initial angle of view and a position of the parking space.

In this way, the initial distance value can be quickly determined, which is beneficial to shorten execution time of the three-dimensional parking display method, thereby improving a response speed. It can be understood that the position of the vehicle corresponding to the initial angle of view refers to a position of the vehicle at the beginning of parking-in. The vehicle 1000 starts to move from this position until the vehicle 1000 is docked in the parking space.

Specifically, the position of the vehicle may be a position of a center point of the vehicle, and a position of a parking space may be a position of a center point of the parking space, such that the initial distance value is determined more accurately.

Specifically, the position of the vehicle may refer to a position of the three-dimensional vehicle model in the three-dimensional environment model, and the position of the parking space may refer to a position of the parking space in the three-dimensional environment model. In this way, position coordinates can be obtained quickly, thereby reducing the time to determine the initial distance value. Further, the initial distance value can be calculated by a formula for calculating a distance between two points in space.

It can be understood that the position of the vehicle may also be a position of the vehicle in the real scenario, and the position of the parking space may be a position of the parking space in the real scenario. For example, the position of the vehicle can be determined based on navigation systems such as the Global Positioning System and the BeiDou Navigation Satellite System. The position of the parking space may be determined based on sensor data, data of a parking lot, and the like collected by the vehicle 1000. The present disclosure has no limitations here.

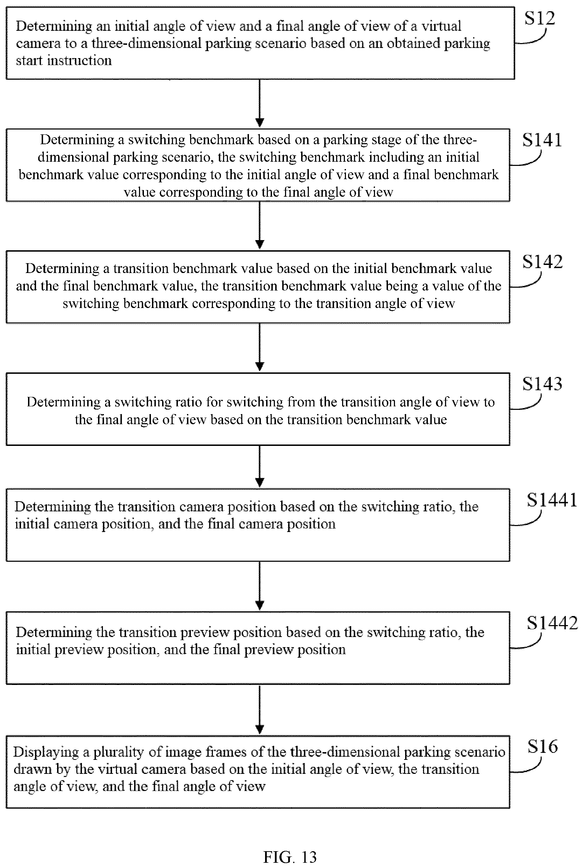

Referring to FIG. 13, in some embodiments, the initial angle of view includes the initial camera position and the initial preview position of the virtual camera. The final angle of view includes the final camera position and the final preview position of the virtual camera. The transition angle of view includes a transition camera position and a transition preview position of the virtual camera. Step S144 includes: step S1441, in which the transition camera position is determined based on the switching ratio, the initial camera position, and the final camera position; and step S 1442, in which the transition preview position is determined based on the switching ratio, the initial preview position, and the final preview position.

In some embodiments, the processor 101 is configured to determine the transition camera position based on the switching ratio, the initial camera position, and the final camera position, and determine the transition preview position based on the switching ratio, the initial preview position, and the final preview position.

In this way, the transition angle of view is determined based on the switching ratio, the initial angle of view, and the final angle of view in two dimensions, the camera position and the preview position, such that the transition angle of view is determined more accurately. As described above, the angle of view can include the camera position and the preview position. The camera position refers to the position of the virtual camera in the three-dimensional parking model. The preview position is related to the direction in which the virtual camera observes the three-dimensional parking model.

Therefore, once the transition camera position and the transition preview position are determined, a corresponding transition angle of view can be determined, thereby avoiding an error of the transition angle of view.

In an example, the three-dimensional parking scenario is in the pre-parking-in stage. A Z-axis coordinate value of the transition preview position can be determined based on the switching ratio and a Z-axis coordinate value of the final preview position. That is:

$$\text{float translateZ} = Z1 * percent,$$

where translateZ represents the Z-axis coordinate value of the transition preview position, Z1 represents the Z-axis coordinate value of the final preview position, and percent represents the switching ratio. The transition preview position can be set by using the following code: (0, 0, translateZ): mCam.lookAt(0, 0, translateZ).

Subsequently, an intermediate value can be determined based on a Y-axis coordinate value of the final preview position, a Y-axis coordinate value of the initial preview position and the switching ratio, and a Y-axis coordinate value and a Z-axis coordinate value of the transition camera position can be determined based on the intermediate value and the transition angle value. The above process can be expressed in code as:

$$\text{float lookY} = Y0 + (Y1\text{-}Y0) * percent;$$

$$\text{float cameraZ} = (\text{float}) \, Math.sin(a1/\, 180.0f * Math.PI) * lookY;$$

and

$$\text{float y} = (\text{float}) \, Math.cos(a1\, /\, 180.0f * Math.PI) * lookY,$$

where Y0 represents the Y-axis coordinate value of the initial preview position, Y1 represents the Y-axis coordinate value of the final preview position, percent represents the switching ratio, lookY represents the intermediate value, cameraZ represents the Y-axis coordinate value of the transition camera position, and y represents the Y-axis coordinate value of the transition camera position.

Finally, the transition camera position can be set by code, i.e.:

```
mCam.position.set(mCam.position.x, y, cameraZ).
```

It can be understood that for the switching ratio corresponding to each transition angle of view, the above process can be performed to determine the corresponding transition preview position and transition camera position, thereby determining the transition angle of view.

In this way, the vehicle-searching region can be narrowed or enlarged, and the virtual camera can rotate at a certain angle around the X axis.

In another example, the three-dimensional parking scenario is the parking-in scenario, i.e., in the parking-in stage. An X-axis coordinate value of the transition camera position can be determined based on an X-axis coordinate value of the final camera position, an X-axis coordinate value of the initial camera position, and the switching ratio. The Y-axis coordinate value of the transition camera position can be determined based on the Y-axis coordinate value of the final camera position, the Y-axis coordinate value of the initial camera position, and the switching ratio. The Z-axis coordinate value of the transition camera position can be determined based on the Z-axis coordinate value of the final camera position, the Z-axis coordinate value of the initial camera position, and the switching ratio. That is:

$$\text{float x2} = x0 + (x1\text{-}x0) * percent;$$

$$\text{float y2} = y0 + (y1\text{-}y0) * percent;$$

and

$$\text{float } z2 = (z0 + (z1\text{-}z0) * percent) * (1\text{-}percent),$$

where percent represents the switching ratio, x0 represents the X-axis coordinate value of the initial camera position, x1 represents the X-axis coordinate value of the final camera position, x2 represents the X-axis coordinate value of the transition camera position, y0 represents the Y-axis coordinate value of the initial camera position, y1 represents the Y-axis coordinate value of the final camera position, y2 represents the Y-axis coordinate value of the transition camera position, z0 represents the Z-axis coordinate value of the initial camera position, z1 represents the Z-axis coordinate value of the final camera position, and z2 represents the Z-axis coordinate value of the transition camera position.

In addition, an initial vector can be determined based on the initial camera position and the initial preview position, and a final vector can be determined based on the final camera position and the final preview position. Then, a current vector is determined based on the initial vector, the final vector, and the switching ratio. Finally, the transition preview position is determined based on the current vector. That is:

$$x4 = x3 + (x5\text{-}x3) * percent;$$

$$y4 = y3 + (y5\text{-}y3) * percent;$$

$$z4 = z3 + (z5\text{-}z3) * percent;$$

and

$$z4 = z4 * (1\text{-}percent),$$

where percent represents the switching ratio, x3 represents an X-axis coordinate value of the initial vector, x5 represents an X-axis coordinate value of the final vector, x4 represents an X-axis coordinate value of the transition vector, y3 represents a Y-axis coordinate value of the initial vector, y5 represents a Y-axis coordinate value of the final vector, y4 represents a Y-axis coordinate value of the transition vector, z3 represents a Z-axis coordinate value of the initial vector, z5 represents a Z-axis coordinate value of the final vector, and z4 represents a Z-axis coordinate value of the transition vector. The transition preview position can be determined based on the transition vector (x4, y4, z4).

It can be understood that during parking-in, if a single angle is maintained for the parking-in, the user's visual experience is not intuitive. However, in this example, with the gradual advancement of the parking-in, the angle of view is gradually switched, and the environment is gradually enlarged at the same time, thereby allowing the user to view the entire parking-in process more intuitively.

The above is only an example, and does not represent a limitation on the determination of the transition angle of view based on the switching ratio, the initial angle of view, and the final angle of view.

An embodiment of the present disclosure also provides a computer-readable storage medium. One or more non-volatile computer-readable storage media contain computer-executable instructions, the computer-executable instructions, when executed by one or more processors 101, causing the one or more processors 101 to implement the three-dimensional parking display method according to any of the above embodiments.

With the storage medium according to the embodiment of the present disclosure, the plurality of image frames of the three-dimensional parking scenario drawn by the virtual camera is displayed based on the initial angle of view and the final angle of view of the virtual camera to the three-dimensional parking scenario that are determined based on the parking start instruction, and the transition angle of view determined based on the initial angle of view and the final angle of view, such that the displayed parking picture is adapted to the real parking scenario, and the switching between the initial angle of view and the final angle of view is smooth and natural. In this way, the visual effect is better, which is beneficial to improve the user experience.

It can be understood by those skilled in the art that all or a part of the processes of the method in the above embodiments can be implemented by relevant hardware instructed by a computer program. The computer program can be stored in a non-volatile computer-readable storage medium. When the program is executed, processes of the method in the above embodiments can be included. The storage medium may be a magnetic disk, an optical disc, a Read-Only Memory (ROM), or the like.

The above embodiments illustrate only some implementations of the present disclosure, which are described in details but cannot be construed to limit the scope of the present disclosure. It should be pointed out that, for those skilled in the art, without departing from the concept of the present disclosure, various changes and improvements can be made, which are covered by the protection scope of the present disclosure. Therefore, the protection scope of the present disclosure shall be subject to the appended claims.

**Claims**

1. A three-dimensional parking display method, comprising:

    determining (S12) an initial angle of view and a final angle of view of a virtual camera to a three-dimensional parking scenario based on an obtained parking start instruction;
    determining (S14) a transition angle of view based on the initial angle of view and the final angle of view, the transition angle of view being an angle of view of the virtual camera in a process of switching from the initial angle of view to the final angle of view; and
    displaying (S16) a plurality of image frames of the three-dimensional parking scenario drawn by the virtual camera based on the initial angle of view, the transition angle of view, and the final angle of view,
    wherein said determining (S14) the transition angle of view based on the initial angle of view and the final angle of view comprises: determining (S141) a switching benchmark based on a parking stage of the three-dimensional parking scenario, wherein the switching benchmark comprises an initial benchmark value corresponding to the initial angle of view and a final benchmark value corresponding to the final angle of view; determining (S142) a transition benchmark value based on the initial benchmark value and the final benchmark value wherein the transition benchmark value is a value of the switching benchmark corresponding to the transition angle of view; determining (S143), based on the transition benchmark value, a switching ratio for switching from the transition angle of view to the final angle of view; and determining (S144) the transition angle of view based on the switching ratio, the initial angle of view, and the final angle of view,
    **characterized in that**,
    the parking stage comprises a parking-in stage, and said determining (S141) the switching benchmark based on the parking stage of the three-dimensional parking scenario comprises:

        determining (S1412) a parking-in distance between a vehicle and a parking space as the switching benchmark when the three-dimensional parking scenario is in the parking-in stage, wherein the parking-in distance comprises an initial distance value corresponding to the initial angle of view and a final distance value corresponding to the final angle of view;
        said determining (S142) the transition benchmark value based on the initial benchmark value and the final benchmark value comprises:

            determining (S1422) a transition distance value based on the initial distance value and the final distance value, the transition distance value being a value of the parking-in distance corresponding to the transition angle of view; and
            said determining (S143), based on the transition benchmark value, the switching ratio for switching from the transition angle of view to the final angle of view comprises:
            determining (S1432), based on the transition distance value and the initial distance value, the switching ratio for switching from the transition angle of view to the final angle of view.

2. The three-dimensional parking display method according to claim 1, wherein the three-dimensional parking scenario comprises a three-dimensional vehicle model and a three-dimensional environment model, the three-dimensional vehicle model is established based on pre-stored vehicle data, and the three-dimensional environment model is established based on signal data collected by a vehicle.

3. The three-dimensional parking display method according to claim 1, wherein the three-dimensional parking scenario further comprises at least one of a vehicle-searching scenario, a vehicle-selecting scenario, or a vehicle-sliding scenario.

4. The three-dimensional parking display method according to claim 3, further comprising:
    when the three-dimensional parking scenario comprises the parking-in stage and at least one of the vehicle-searching scenario, the vehicle-selecting scenario, or the vehicle-sliding scenario, determining an angle of view initially corresponding to a first three-dimensional parking scenario as the initial angle of view, and determining an angle of view finally corresponding to a last three-dimensional parking scenario as the final angle of view.

5. The three-dimensional parking display method according to claim 1, wherein the parking stage comprises a pre-parking-in stage, and said determining (S141) the switching benchmark based on the parking stage of the three-dimensional parking scenario comprises:

determining (S1411) a shooting angle of the virtual camera as the switching benchmark when the three-dimensional parking scenario is in the pre-parking-in stage, wherein the shooting angle comprises an initial angle value corresponding to the initial angle of view and a final angle value corresponding to the final angle of view; said determining (S142) the transition benchmark value based on the initial benchmark value and the final benchmark value comprises:

determining (S 1421) a transition angle value based on the initial angle value and the final angle value, the transition angle value being a value of the shooting angle corresponding to the transition angle of view; and said determining (S143), based on the transition benchmark value, the switching ratio for switching from the transition angle of view to the final angle of view comprises:
determining (S 1431), based on the transition angle value and the final angle value, the switching ratio for switching from the transition angle of view to the final angle of view.

6. The three-dimensional parking display method according to claim 1, wherein the parking stage comprises a pre-parking-in stage, and when the three-dimensional parking scenario is in the pre-parking-in stage, the switching benchmark comprises at least one of a shooting angle, a camera position, a preview position, and switching time of the virtual camera.

7. The three-dimensional parking display method according to claim 1, comprising:
determining the initial distance value based on a position of the vehicle corresponding to the initial angle of view and a position of the parking space.

8. The three-dimensional parking display method according to claim 7, wherein the three-dimensional parking scenario comprises a three-dimensional vehicle model and a three-dimensional environment model, the position of the vehicle refers to a position of the three-dimensional vehicle model in the three-dimensional environment model, and the position of the parking space refers to a position of the parking space in the three-dimensional environment model.

9. The three-dimensional parking display method according to claim 3, wherein the initial angle of view comprises an initial camera position and an initial preview position of the virtual camera; the final angle of view comprises a final camera position and a final preview position of the virtual camera; the transition angle of view comprises a transition camera position and a transition preview position of the virtual camera, and said determining (S144) the transition angle of view based on the switching ratio, the initial angle of view, and the final angle of view comprises:

determining (S1441) the transition camera position based on the switching ratio, the initial camera position, and the final camera position; and
determining (S1442) the transition preview position based on the switching ratio, the initial preview position, and the final preview position.

10. The three-dimensional parking display method according to claim 9, wherein when the three-dimensional parking scenario is in a pre-parking-in stage, said determining the transition camera position based on the switching ratio, the initial camera position, and the final camera position comprises:

determining an X-axis coordinate value of the transition camera position based on an X-axis coordinate value of the final camera position, an X-axis coordinate value of the initial camera position, and the switching ratio; determining a Y-axis coordinate value of the transition camera position based on a Y-axis coordinate value of the final camera position, a Y-axis coordinate value of the initial camera position, and the switching ratio; and determining a Z-axis coordinate value of the transition camera position based on a Z-axis coordinate value of the final camera position, a Z-axis coordinate value of the initial camera position, and the switching ratio.

11. The three-dimensional parking display method according to claim 1, wherein said displaying the plurality of image frames of the three-dimensional parking scenario drawn by the virtual camera based on the initial angle of view, the transition angle of view, and the final angle of view comprises:

obtaining an image frame of an initial parking picture drawn by the virtual camera at the initial angle of view, an image frame of a transition parking picture drawn by the virtual camera at the transition angle of view, and an image frame of a final parking picture drawn by the virtual camera at the final angle of view; and

displaying the image frame of the initial parking picture, the image frame of the transition parking picture, and the image frame of the final parking picture sequentially.

**12.** A vehicle (1000) comprising a memory (102) and a processor (101), **characterized in that** the memory (102) has a computer program stored thereon, and the processor (101) is configured to execute the computer program to implement the three-dimensional parking display method according to any one of claims 1 to 11.

**13.** A non-volatile computer-readable storage medium of computer-executable instructions, **characterized in that** the computer-executable instructions, when executed by one or more processors, cause the one or more processors to implement the three-dimensional parking display method according to any one of claims 1 to 11.

**Patentansprüche**

**1.** Verfahren zur dreidimensionalen Parkanzeige, das Folgendes beinhaltet:

Bestimmen (S12) eines Anfangsblickwinkels und eines Endblickwinkels einer virtuellen Kamera auf ein dreidimensionales Parkszenario auf der Basis einer erhaltenen Parkstartanwei sung;

Bestimmen (S14) eines Übergangsblickwinkels auf der Basis des Anfangsblickwinkels und des Endblickwinkels, wobei der Übergangsblickwinkel ein Blickwinkel der virtuellen Kamera in einem Prozess des Umschaltens vom Anfangsblickwinkel auf den Endblickwinkel ist; und

Anzeigen (S 16) mehrerer Bildrahmen des von der virtuellen Kamera gezeichneten dreidimensionalen Parkszenarios auf der Basis des Anfangsblickwinkels, des Übergangsblickwinkels und des Endblickwinkels,

wobei das genannte Bestimmen (S14) des Übergangsblickwinkels auf der Basis des Anfangsblickwinkels und des Endblickwinkels Folgendes beinhaltet: Bestimmen (S141) eines Umschaltbezugspunkts auf der Basis einer Parkphase des dreidimensionalen Parkszenarios, wobei der Umschaltbezugspunkt einen Anfangsbezugspunktwert entsprechend dem Anfangsblickwinkel und einen Endbezugspunktwert entsprechend dem Endblickwinkel umfasst; Bestimmen (S142) eines Übergangsbezugspunktwerts auf der Basis des Anfangsbezugspunktwerts und des Endbezugspunktwerts, wobei der Übergangsbezugspunktwert ein Wert des Umschaltbezugspunkts ist, der dem Übergangsblickwinkel entspricht; Bestimmen (S 143), auf der Basis des Übergangsbezugspunktwerts, eines Umschaltverhältnisses zum Umschalten vom Übergangsblickwinkel auf den Endblickwinkel; und Bestimmen (S 144) des Übergangsblickwinkels auf der Basis des Umschaltverhältnisses, des Anfangsblickwinkels und des Endblickwinkels,

**dadurch gekennzeichnet, dass**

die Parkphase eine Einparkphase umfasst und das genannte Bestimmen (S 141) des Umschaltbezugspunkts auf der Basis der Parkphase des dreidimensionalen Parkszenarios Folgendes beinhaltet:

Bestimmen (S 1412) einer Einparkdistanz zwischen einem Fahrzeug und einer Parklücke als Umschaltbezugspunkt, wenn sich das dreidimensionale Parkszenario in der Einparkphase befindet, wobei die Einparkdistanz einen Anfangsdistanzwert entsprechend dem Anfangsblickwinkel und einen Enddistanzwert entsprechend dem Endblickwinkel umfasst;

wobei das genannte Bestimmen (S142) des Übergangsbezugswerts auf der Basis des Anfangsbezugspunktwerts und des Endbezugspunktwerts Folgendes beinhaltet:

Bestimmen (S1422) eines Übergangsdistanzwerts auf der Basis des Anfangsdistanzwerts und des Enddistanzwerts, wobei der Übergangsdistanzwert ein Wert der Einparkdistanz ist, der dem Übergangsblickwinkel entspricht; und

das genannte Bestimmen (S143), auf der Basis des Übergangsbezugspunktwerts, des Umschaltverhältnisses zum Umschalten vom Übergangsblickwinkel auf den Endblickwinkel Folgendes beinhaltet: Bestimmen (S1432), auf der Basis des Übergangsdistanzwerts und des Anfangsdistanzswertes, des Umschaltverhältnisses zum Umschalten vom Übergangsblickwinkel auf den Endblickwinkel.

**2.** Verfahren zur dreidimensionalen Parkanzeige nach Anspruch 1, wobei das dreidimensionale Parkszenario ein dreidimensionales Fahrzeugmodell und ein dreidimensionales Umgebungsmodell umfasst, wobei das dreidimensionale Fahrzeugmodell auf der Basis von vorab gespeicherten Fahrzeugdaten erstellt wird und das dreidimensionale Umgebungsmodell auf der Basis von durch ein Fahrzeug gesammelten Signaldaten erstellt wird.

3. Verfahren zur dreidimensionalen Parkanzeige nach Anspruch 1, wobei das dreidimensionale Parkszenario ferner mindestens eines von einem Fahrzeugsuchszenario, einem Fahrzeugauswahlszenario oder einem Fahrzeugverschiebeszenario umfasst.

4. Verfahren zur dreidimensionalen Parkanzeige nach Anspruch 3, das ferner Folgendes beinhaltet:
Bestimmen, wenn das dreidimensionale Parkszenario die Einparkphase und mindestens eines von dem Fahrzeugsuchszenario, dem Fahrzeugauswahlszenario oder dem Fahrzeugverschiebeszenario umfasst, eines Blickwinkels, der anfangs einem ersten dreidimensionalen Parkszenario entspricht, als den Anfangsblickwinkel, und Bestimmen eines Blickwinkels, der schließlich einem letzten dreidimensionalen Parkszenario entspricht, als den Endblickwinkel.

5. Verfahren zur dreidimensionalen Parkanzeige nach Anspruch 1, wobei die Parkphase eine Voreinparkphase umfasst und das genannte Bestimmen (S141) des Umschaltbezugspunkts auf der Basis der Parkphase des dreidimensionalen Parkszenarios Folgendes beinhaltet:

Bestimmen (S1411) eines Aufnahmewinkels der virtuellen Kamera als Umschaltbezugpunkt, wenn das dreidimensionale Parkszenario in der Voreinparkphase ist, wobei der Aufnahmewinkel einen Anfangswinkelwert entsprechend dem Anfangsblickwinkel und einen Endwinkelwert entsprechend dem Endblickwinkel umfasst; wobei das genannte Bestimmen (S142) des Übergangsbezugspunktwerts auf der Basis des Anfangsbezugspunktwerts und des Endbezugspunktwerts Folgendes beinhaltet:

Bestimmen (S1421) eines Übergangswinkelwerts auf der Basis des Anfangswinkelwerts und des Endwinkelwerts, wobei der Übergangswinkelwert ein Wert des Aufnahmewinkels ist, der dem Übergangsblickwinkel entspricht; und
wobei das genannte Bestimmen (S 143), auf der Basis des Übergangsbezugspunktwerts, des Umschaltverhältnisses zum Umschalten vom Übergangsblickwinkel auf den Endblickwinkel Folgendes beinhaltet:
Bestimmen (S 1431), auf der Basis des Übergangswinkelwerts und des Endwinkelwerts, des Umschaltverhältnisses zum Umschalten vom Übergangsblickwinkel auf den Endblickwinkel.

6. Verfahren zur dreidimensionalen Parkanzeige nach Anspruch 1, wobei die Parkphase eine Voreinparkphase umfasst, und wenn sich das dreidimensionale Parkszenario in der Voreinparkphase befindet, der Umschaltbezugpunkt mindestens eines von einem Aufnahmewinkel, einer Kameraposition, einer Voransichtsposition und einer Umschaltzeit der virtuellen Kamera umfasst.

7. Verfahren zur dreidimensionalen Parkanzeige nach Anspruch 1, das Folgendes beinhaltet:
Bestimmen des Anfangsdistanzwerts auf der Basis einer Position des Fahrzeugs entsprechend dem Anfangsblickwinkel und einer Position der Parklücke.

8. Verfahren zur dreidimensionalen Parkanzeige nach Anspruch 7, wobei das dreidimensionale Parkszenario ein dreidimensionales Fahrzeugmodell und ein dreidimensionales Umgebungsmodell umfasst, die Position des Fahrzeugs sich auf eine Position des dreidimensionalen Fahrzeugmodells in dem dreidimensionalen Umgebungsmodell bezieht und die Position der Parklücke sich auf eine Position der Parklücke in dem dreidimensionalen Umgebungsmodell bezieht.

9. Verfahren zur dreidimensionalen Parkanzeige nach Anspruch 3, wobei der Anfangsblickwinkel eine Anfangskameraposition und eine Anfangsvoransichtsposition der virtuellen Kamera umfasst; der Endblickwinkel eine Endkameraposition und eine Endvoransichtsposition der virtuellen Kamera umfasst; der Übergangswinkel eine Übergangskameraposition und eine Übergangsvoransichtsposition der virtuellen Kamera umfasst, und das genannte Bestimmen (S144) des Übergangsblickwinkels auf der Basis des Umschaltverhältnisses, des Anfangsblickwinkels und des Endblickwinkels Folgendes beinhaltet:

Bestimmen (S 1441) der Übergangskameraposition auf der Basis des Umschaltverhältnisses, der Anfangskameraposition und der Endkameraposition; und
Bestimmen (S 1442) der Übergangsvoransichtsposition auf der Basis des Umschaltverhältnisses, der Anfangsvoransichtsposition und der Endvoransichtsposition.

10. Verfahren zur dreidimensionalen Parkanzeige nach Anspruch 9, wobei, wenn das dreidimensionale Parkszenario in einer Voreinparkphase ist, das genannte Bestimmen der Übergangskameraposition auf der Basis des Umschaltverhältnisses, der Anfangskameraposition und der Endkameraposition Folgendes beinhaltet:

Bestimmen eines X-Achsen-Koordinatenwerts der Übergangskameraposition auf der Basis eines X-Achsen-Koordinatenwerts der Endkameraposition, eines X-Achsen-Koordinatenwerts der Anfangskameraposition und des Umschaltverhältnisses;

Bestimmen eines Y-Achsenkoordinatenwerts der Übergangskameraposition auf der Basis eines Y-Achsenkoordinatenwerts der Endkameraposition, eines Y-Achsenkoordinatenwerts der Anfangskameraposition und des Umschaltverhältnisses; und

Bestimmen eines Z-Achsen-Koordinatenwerts der Übergangskameraposition auf der Basis eines Z-Achsen-Koordinatenwerts der Endkameraposition, eines Z-Achsen-Koordinatenwerts der Anfangskameraposition und des Umschaltverhältnisses.

11. Verfahren zur dreidimensionalen Parkanzeige nach Anspruch 1, wobei das genannte Anzeigen der mehreren Bildrahmen des von der virtuellen Kamera gezeichneten dreidimensionalen Parkszenarios auf der Basis des Anfangsblickwinkels, des Übergangsblickwinkels und des Endblickwinkels Folgendes beinhaltet:

Erhalten eines Bildrahmens eines von der virtuellen Kamera bei dem Anfangsblickwinkel gezeichneten Anfangsparkbildes, eines Bildrahmens eines von der virtuellen Kamera bei dem Übergangsblickwinkel gezeichneten Übergangsparkbildes und eines Bildrahmens eines von der virtuellen Kamera bei dem Endblickwinkel gezeichneten Endparkbildes; und

Anzeigen des Bildrahmens des Anfangsparkbildes, des Bildrahmens des Übergangsparkbildes und des Bildrahmens des Endparkbildes nacheinander.

12. Fahrzeug (1000) mit einem Speicher (102) und einem Prozessor (101), **dadurch gekennzeichnet, dass** in dem Speicher (102) ein Computerprogramm gespeichert ist und der Prozessor (101) zum Ausführen des Computerprogramms konfiguriert ist, um das Verfahren zur dreidimensionalen Parkanzeige nach einem der Ansprüche 1 bis 11 zu implementieren.

13. Nichtflüchtiges computerlesbares Speichermedium mit computerausführbaren Befehlen, **dadurch gekennzeichnet, dass** die computerausführbaren Befehle bei Ausführung durch einen oder mehrere Prozessoren bewirken, dass die ein oder mehreren Prozessoren das Verfahren zur dreidimensionalen Parkanzeige nach einem der Ansprüche 1 bis 11 implementieren.

**Revendications**

1. Procédé d'affichage de stationnement tridimensionnel, comprenant :

une détermination (S12) d'un angle de vue initial et d'un angle de vue final d'une caméra virtuelle pour un scénario de stationnement tridimensionnel sur la base d'une instruction de démarrage de stationnement obtenue ;

une détermination (S14) d'un angle de vue de transition sur la base de l'angle de vue initial et de l'angle de vue final, l'angle de vue de transition étant un angle de vue de la caméra virtuelle dans un processus de basculement de l'angle de vue initial à l'angle de vue final ; et

un affichage (S16) d'une pluralité de trames d'images du scénario de stationnement tridimensionnel dessinées par la caméra virtuelle sur la base de l'angle de vue initial, de l'angle de vue de transition, et de l'angle de vue final, dans lequel ladite détermination (S14) de l'angle de vue de transition sur la base de l'angle de vue initial et de l'angle de vue final comprend : une détermination (S141) d'un repère de basculement sur la base d'une étape de stationnement du scénario de stationnement tridimensionnel, dans lequel le repère de basculement comprend une valeur repère initiale correspondant à l'angle de vue initial et une valeur repère finale correspondant à l'angle de vue final ; une détermination (S 142) d'une valeur repère de transition sur la base de la valeur repère initiale et de la valeur repère finale dans lequel la valeur repère de transition est une valeur du repère de basculement correspondant à l'angle de vue de transition ; une détermination (S 143), sur la base de la valeur repère de transition, d'un rapport de basculement pour un basculement de l'angle de vue de transition à l'angle de vue final ; et une détermination (S144) de l'angle de vue de transition sur la base du rapport de basculement, de l'angle de vue initial, et de l'angle de vue final,

**caractérisé en ce que**

l'étape de stationnement comprend une étape de mise en stationnement, et ladite détermination (S141) du repère de basculement sur la base de l'étape de stationnement du scénario de stationnement tridimensionnel comprend :

une détermination (S1412) d'une distance de mise en stationnement entre un véhicule et un espace de stationnement à titre de repère de basculement lorsque le scénario de stationnement tridimensionnel est à l'étape de mise en stationnement, dans lequel la distance de mise en stationnement comprend une valeur de distance initiale correspondant à l'angle de vue initial et une valeur de distance finale correspondant à l'angle de vue final ;

ladite détermination (S 142) de la valeur repère de transition sur la base de la valeur repère initiale et de la valeur repère finale comprend :

une détermination (S1422) d'une valeur de distance de transition sur la base de la valeur de distance initiale et de la valeur de distance finale, la valeur de distance de transition étant une valeur de la distance de mise en stationnement correspondant à l'angle de vue de transition ; et

ladite détermination (S 143), sur la base de la valeur repère de transition, du rapport de basculement pour un basculement de l'angle de vue de transition à l'angle de vue final comprend :

une détermination (S1432), sur la base de la valeur de distance de transition et de la valeur de distance initiale, du rapport de basculement pour un basculement de l'angle de vue de transition à l'angle de vue final.

2. Procédé d'affichage de stationnement tridimensionnel selon la revendication 1, dans lequel le scénario de stationnement tridimensionnel comprend un modèle de véhicule tridimensionnel et un modèle d'environnement tridimensionnel, le modèle de véhicule tridimensionnel est établi sur la base de données de véhicule pré-stockées, et le modèle d'environnement tridimensionnel est établi sur la base de données de signal collectées par un véhicule.

3. Procédé d'affichage de stationnement tridimensionnel selon la revendication 1, dans lequel le scénario de stationnement tridimensionnel comprend en outre au moins un scénario parmi un scénario de recherche de véhicule, un scénario de sélection de véhicule, ou un scénario de glissement de véhicule.

4. Procédé d'affichage de stationnement tridimensionnel selon la revendication 3, comprenant en outre :
lorsque le scénario de stationnement tridimensionnel comprend l'étape de mise en stationnement et au moins un scénario parmi le scénario de recherche de véhicule, le scénario de sélection de véhicule, ou le scénario de glissement de véhicule, une détermination d'un angle de vue correspondant initialement à un premier scénario de stationnement tridimensionnel à titre d'angle de vue initial, et une détermination d'un angle de vue correspondant pour finir à un dernier scénario de stationnement tridimensionnel à titre d'angle de vue final.

5. Procédé d'affichage de stationnement tridimensionnel selon la revendication 1, dans lequel l'étape de stationnement comprend une étape préalable à une mise en stationnement, et ladite détermination (S141) du repère de basculement sur la base de l'étape de stationnement du scénario de stationnement tridimensionnel comprend :

une détermination (S1411) d'un angle de prise de vue de la caméra virtuelle à titre de repère de basculement lorsque le scénario de stationnement tridimensionnel est à l'étape préalable à une mise en stationnement, dans lequel l'angle de prise de vue comprend une valeur d'angle initiale correspondant à l'angle de vue initial et une valeur d'angle finale correspondant à l'angle de vue final ;

ladite détermination (S 142) de la valeur repère de transition sur la base de la valeur repère initiale et de la valeur repère finale comprend :

une détermination (S1421) d'une valeur d'angle de transition sur la base de la valeur d'angle initiale et de la valeur d'angle finale, la valeur d'angle de transition étant une valeur de l'angle de prise de vue correspondant à l'angle de vue de transition ; et

ladite détermination (S 143), sur la base de la valeur repère de transition, du rapport de basculement pour un basculement de l'angle de vue de transition à l'angle de vue final comprend :

une détermination (S1431), sur la base de la valeur d'angle de transition et de la valeur d'angle finale, du rapport de basculement pour un basculement de l'angle de vue de transition à l'angle de vue final.

6. Procédé d'affichage de stationnement tridimensionnel selon la revendication 1, dans lequel l'étape de stationnement comprend une étape préalable à une mise en stationnement, et lorsque le scénario de stationnement tridimensionnel est à l'étape préalable à une mise en stationnement, le repère de basculement comprend au moins un élément parmi un angle de prise de vue, une position de caméra, une position de prévisualisation, et un instant de basculement de la caméra virtuelle.

**7.** Procédé d'affichage de stationnement tridimensionnel selon la revendication 1, comprenant :
une détermination de la valeur de distance initiale sur la base d'une position du véhicule correspondant à l'angle de vue initial et une position de l'espace de stationnement.

**8.** Procédé d'affichage de stationnement tridimensionnel selon la revendication 7, dans lequel le scénario de stationnement tridimensionnel comprend un modèle de véhicule tridimensionnel et un modèle d'environnement tridimensionnel, la position du véhicule fait référence à une position du modèle de véhicule tridimensionnel dans le modèle d'environnement tridimensionnel, et la position de l'espace de stationnement fait référence à une position de l'espace de stationnement dans le modèle d'environnement tridimensionnel.

**9.** Procédé d'affichage de stationnement tridimensionnel selon la revendication 3, dans lequel l'angle de vue initial comprend une position de caméra initiale et une position de prévisualisation initiale de la caméra virtuelle ; l'angle de vue final comprend une position de caméra finale et une position de prévisualisation finale de la caméra virtuelle ; l'angle de vue de transition comprend une position de caméra de transition et une position de prévisualisation de transition de la caméra virtuelle, et ladite détermination (S144) de l'angle de vue de transition sur la base du rapport de basculement, de l'angle de vue initial, et de l'angle de vue final comprend :

une détermination (S 1441) de la position de caméra de transition sur la base du rapport de basculement, de la position de caméra initiale, et de la position de caméra finale ; et
une détermination (S 1442) de la position de prévisualisation de transition sur la base du rapport de basculement, de la position de prévisualisation initiale, et de la position de prévisualisation finale.

**10.** Procédé d'affichage de stationnement tridimensionnel selon la revendication 9, dans lequel lorsque le scénario de stationnement tridimensionnel est à une étape préalable à une mise en stationnement, ladite détermination de la position de caméra de transition sur la base du rapport de basculement, de la position de caméra initiale, et de la position de caméra finale comprend :

une détermination d'une valeur de coordonnées d'axe X de la position de caméra de transition sur la base d'une valeur de coordonnées d'axe X de la position de caméra finale, d'une valeur de coordonnées d'axe X de la position de caméra initiale, et du rapport de basculement ;
une détermination d'une valeur de coordonnées d'axe Y de la position de caméra de transition sur la base d'une valeur de coordonnées d'axe Y de la position de caméra finale, d'une valeur de coordonnées d'axe Y de la position de caméra initiale, et du rapport de basculement ; et
une détermination d'une valeur de coordonnées d'axe Z de la position de caméra de transition sur la base d'une valeur de coordonnées d'axe Z de la position de caméra finale, d'une valeur de coordonnées d'axe Z de la position de caméra initiale, et du rapport de basculement.

**11.** Procédé d'affichage de stationnement tridimensionnel selon la revendication 1, dans lequel ledit affichage de la pluralité de trames d'images du scénario de stationnement tridimensionnel dessinées par la caméra virtuelle sur la base de l'angle de vue initial, de l'angle de vue de transition, et de l'angle de vue final comprend :

une obtention d'une trame d'image d'une représentation de stationnement initiale dessinée par la caméra virtuelle à l'angle de vue initial, une trame d'image d'une représentation de stationnement de transition dessinée par la caméra virtuelle à l'angle de vue de transition, et une trame d'image d'une représentation de stationnement finale dessinée par la caméra virtuelle à l'angle de vue final ; et
un affichage de la trame d'image de la représentation de stationnement initiale, la trame d'image de la représentation de stationnement de transition, et la trame d'image de la représentation de stationnement finale en séquence.

**12.** Véhicule (1000) comprenant une mémoire (102) et un processeur (101), **caractérisé en ce que** la mémoire (102) présente un programme informatique stocké dessus, et le processeur (101) est configuré pour exécuter le programme informatique pour mettre en oeuvre le procédé d'affichage de stationnement tridimensionnel selon l'une quelconque des revendications 1 à 11.

**13.** Support de stockage lisible par ordinateur non volatile d'instructions exécutables par ordinateur, **caractérisé en ce que** les instructions exécutables par ordinateur, lorsqu'elles sont exécutées par un ou plusieurs processeurs, amènent les un ou plusieurs processeurs à mettre en oeuvre le procédé d'affichage de stationnement tridimensionnel selon l'une quelconque des revendications 1 à 11.

Determining an initial angle of view and a final angle of view of a virtual camera to a three-dimensional parking scenario based on an obtained parking start instruction

S12

Determining a transition angle of view based on the initial angle of view and the final angle of view

S14

Displaying a plurality of image frames of the three-dimensional parking scenario drawn by the virtual camera based on the initial angle of view, the transition angle of view, and the final angle of view

S16

FIG .1

1000

Vehicle

101

Processor

102

Memory

FIG .2

1000

FIG. 3

1001

1002

A

L

B

α

S

FIG. 4

FIG. 5

FIG. 6

FIG. 7

FIG. 8

Determining an initial angle of view and a final angle of view of a virtual camera to a three-dimensional parking scenario based on an obtained parking start instruction

S12

Determining a switching benchmark based on a parking stage of the three-dimensional parking scenario, the switching benchmark including an initial benchmark value corresponding to the initial angle of view and a final benchmark value corresponding to the final angle of view

S141

Determining a transition benchmark value based on the initial benchmark value and the final benchmark value, the transition benchmark value being a value of the switching benchmark corresponding to the transition angle of view

S142

Determining a switching ratio for switching from the transition angle of view to the final angle of view based on the transition benchmark value

S143

Determining the transition angle of view based on the switching ratio, the initial angle of view, and the final angle of view

S144

Displaying a plurality of image frames of the three-dimensional parking scenario drawn by the virtual camera based on the initial angle of view, the transition angle of view, and the final angle of view

S16

FIG. 9

Determining an initial angle of view and a final angle of view of a virtual camera to a three-dimensional parking scenario based on an obtained parking start instruction — S12

Determining a shooting angle of the virtual camera as the switching benchmark when the three-dimensional parking scenario is in the pre-parking-in stage, the shooting angle including the initial angle value corresponding to the initial angle of view and the final angle value corresponding to the final angle of view — S1411

Determing a transition angle value based on the initial angle value and the final angle value, the transition angle value being a value of the shooting angle corresponding to the transition angle of view — S1421

Determining, based on the transition angle value and the final angle value, the switching ratio for switching from the transition angle of view to the final angle of view — S1431

Determining the transition angle of view based on the switching ratio, the initial angle of view, and the final angle of view — S144

Displaying a plurality of image frames of the three-dimensional parking scenario drawn by the virtual camera based on the initial angle of view, the transition angle of view, and the final angle of view — S16

FIG. 10

Determining an initial angle of view and a final angle of view of a virtual camera to a three-dimensional parking scenario based on an obtained parking start instruction $\qquad$ S12

Determining a parking-in distance between the vehicle and a parking space as the switching benchmark when the three-dimensional parking scenario is in the parking-in stage, the parking-in distance including an initial distance value corresponding to the initial angle of view and a final distance value corresponding to the final angle of view $\qquad$ S1412

Determining a transition distance value based on the initial distance value and the final distance value, the transition distance value being a value of the parking-in distance corresponding to the transition angle of view $\qquad$ S1422

Determining, based on the transition distance value and the initial distance value, the switching ratio for switching from the transition angle of view to the final angle of view $\qquad$ S1432

Determining the transition angle of view based on the switching ratio, the initial angle of view, and the final angle of view $\qquad$ S144

Displaying a plurality of image frames of the three-dimensional parking scenario drawn by the virtual camera based on the initial angle of view, the transition angle of view, and the final angle of view $\qquad$ S16

FIG. 11

Determining an initial angle of view and a final angle of view of a virtual camera to a three-dimensional parking scenario based on an obtained parking start instruction — S12

Determining the initial distance value based on a position of the vehicle corresponding to the initial angle of view and a position of the parking space — S13

Determining a parking-in distance between the vehicle and a parking space as the switching benchmark when the three-dimensional parking scenario is in the parking-in stage, the parking-in distance including an initial distance value corresponding to the initial angle of view and a final distance value corresponding to the final angle of view — S1412

Determining a transition distance value based on the initial distance value and the final distance value, the transition distance value being a value of the parking-in distance corresponding to the transition angle of view — S1422

Determining, based on the transition distance value and the initial distance value, the switching ratio for switching from the transition angle of view to the final angle of view — S1432

Determining the transition angle of view based on the switching ratio, the initial angle of view, and the final angle of view — S144

Displaying a plurality of image frames of the three-dimensional parking scenario drawn by the virtual camera based on the initial angle of view, the transition angle of view, and the final angle of view — S16

FIG. 12

Determining an initial angle of view and a final angle of view of a virtual camera to a three-dimensional parking scenario based on an obtained parking start instruction — S12

Determining a switching benchmark based on a parking stage of the three-dimensional parking scenario, the switching benchmark including an initial benchmark value corresponding to the initial angle of view and a final benchmark value corresponding to the final angle of view — S141

Determining a transition benchmark value based on the initial benchmark value and the final benchmark value, the transition benchmark value being a value of the switching benchmark corresponding to the transition angle of view — S142

Determining a switching ratio for switching from the transition angle of view to the final angle of view based on the transition benchmark value — S143

Determining the transition camera position based on the switching ratio, the initial camera position, and the final camera position — S1441

Determining the transition preview position based on the switching ratio, the initial preview position, and the final preview position — S1442

Displaying a plurality of image frames of the three-dimensional parking scenario drawn by the virtual camera based on the initial angle of view, the transition angle of view, and the final angle of view — S16

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010410618
- EP 1179958 A1
- EP 3392801 A1
- US 2009079828 A1